Europäisches Patentamt

European Patent Office

Office européen des brevets

(19)

(11) Publication number : **0 225 340**
**B1**

(12) **EUROPEAN PATENT SPECIFICATION**

(45) Date of publication of patent specification :
28.03.90

(21) Application number : 86902884.5

(22) Date of filing : 09.05.86

(86) International application number :
PCT/GB 86/00255

(87) International publication number :
WO/86068 (20.11.86 Gazettee 86/25)

(51) Int. Cl.⁵ : **H 02 J 13/00**

(54) A CONTROL SYSTEM.

(30) Priority : 09.05.85 GB 8511691

(43) Date of publication of application :
16.06.87 Bulletin 87/25

(45) Publication of the grant of the patent :
28.03.90 Bulletin 90/13

(84) Designated contracting states :
AT BE CH DE FR GB IT LI LU NL SE

(56) References cited :
EP—A— 0 069 470
DE—A— 2 800 472
DE—A— 2 832 942
DE—A— 3 040 081
US—A— 4 024 528
US—A— 4 302 750
US—A— 4 396 844

(73) Proprietor : BRITISH TELECOMMUNICATIONS public
limited company
81 Newgate Street
London EC1A 7AJ (GB)

(72) Inventor : TROTT, Graham, John
38 Cordy's Lane Trimley St. Mary
Ipswich Suffolk IP10 OUD (GB)
Inventor : PRIOR, Peter, Vincent
102 Valley Road Ipswich
Suffolk IP1 4PA (GB)
Inventor : LAWRENCE, Peter, Jamie
13 Fleetwood Avenue
Felixstowe Suffolk IP11 9HR (GB)
Inventor : SHEPPARD, Anthony, John
Gleneagles Charsfiled
Woodbridge Suffolk IP13 7PJ (GB)

(74) Representative : Pratt, David Martin et al
Intellectual Property Unit British Telecom 151 Gower
Street
London WC1E 6BA (GB)

## Description

This invention concerns a system for the control of electricity supply to equipment by means of signals transmitted from a remote controller. In particular, the invention concerns a system of the type which utilises existing electrical power supply wiring lines as communications channels. Known systems of this type containing all the features of the first part of Claims 1 and 12 are described in DE-A-2 832 942, DE-A-2 800 472 and US-A-4 396 844 which does not disclose a portable controller. This invention also concerns a module for use in such a system.

Electrical power wiring lines are attractive for use as communications channels because they provide an already existing, and therefore cost free, transmission medium, with a largely unused bandwidth. Systems for the control of electricity supply to equipment that is already linked to an electrical power wiring line are conveniently implemented using the same wiring line. Systems for the control of electricity supply to equipment have been proposed in the past and much effort has been given to solving the problems of implementation. However, one area where the problems of existing systems have not been satisfactorily overcome is that of the interface between the system and its users. Clearly, it is a major disadvantage for the user wishing to access the system if this is only possible, as frequently in the prior art, at one location via a control console. One way of attempting to make such a system more convenient for the user is to install several control consoles at a variety of locations. However, this approach increases the expense of the system and its installation.

The present invention provides a system for the control of electricity supply to equipment via electrical wiring, the system comprising a plurality of modules which, in use, are interconnected via the electrical wiring, each of the modules including store means for storing a respective module address, at least some of the modules — control modules — having means for receiving command signals transmitted from a cordless portable controller and for retransmitting said command signals over the electrical wiring to other modules, and at least some of the modules including control means for controlling electricity supply to respective equipment connected thereto, in response to command signals received via the electrical wiring and containing a destination address which matches the address stored in its store means, characterised in that each module contains means for switching to a programming mode during which the respective module is operable in response to a program command message from the controller to store a module address contained in that message in its store means.

The invention also provides a module for use in a system for controlling the supply of electricity to equipment, the module comprising store means, receiving means, and control means, the store means being arranged for storing a respective module address, the receiving means being arranged for receiving command signals from a cordless portable controller either directly or via electrical wiring, and the control means being arranged for controlling the electricity supply to equipment connected to the module in response to command signals containing an address which matches the stored address, characterised in that the module contains means for switching to a programming mode during which the module is operable in response to a program command message from the controller to store a module address contained in that message in its store means.

The system according to the invention may conveniently be accessed by a user from any desired locations in the vicinity of the system, and in some embodiments also from any telephone, in both cases by the use of the same pocket-size controller.

Embodiments of the system may be installed in any configuration with as many or as few modules as desired. Wired-in modules may be used, or plug-in modules may be used so that installation then involves merely plugging the modules into sockets connected to the electrical supply wiring and initialising them.

The invention will now be described by way of example with reference to the accompanying drawings, in which :

Figure 1 is a block diagram illustrating a system embodying the invention for the control of electricity supply to equipment ;

Figure 2 is a flowchart illustrating the operation of the equipment modules ;

Figure 3 is a block diagram of an equipment module forming part of the system ;

Figure 4 is a block diagram of the portable cordless controller of the system ; and

Figures 5 and 6 are flowcharts illustrating the programming of the portable cordless controller of Figure 4 and the equipment module of Figure 3 respectively.

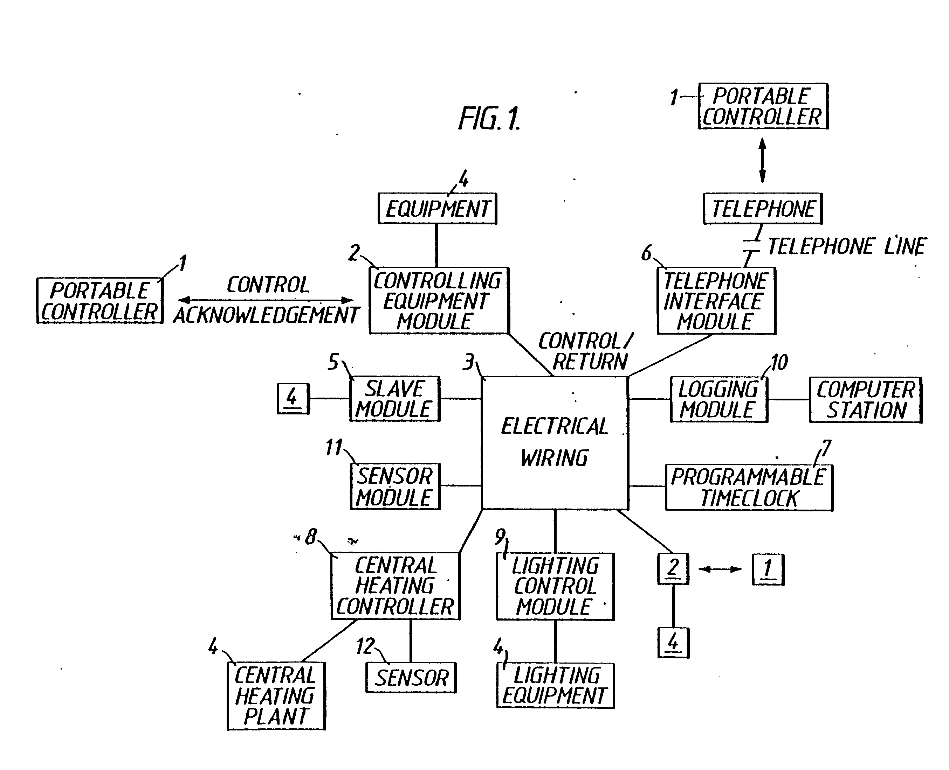

Referring to the drawings, Figure 1 shows a control system which comprises equipment modules 2, 5, 8 and 9 which, in use, are interconnected with each other and with other modules via the electrical power wiring 3, and have means for connection to respective equipment and appliances 4. There are four types of equipment modules control modules 2 (two of which are shown), slave modules 5, a central heating controller 8, and a lighting control module 9. The controller 8 and the module 9 are particular examples of slave module. The control modules 2 have means for communicating with a cordless portable controller 1, and means for relaying signals received from the cordless portable controller over the electrical wiring 3.

The equipment modules are basically controllable switches, electrically connecting (close-circuit state) the respective equipment and appliances with, or disconnecting (open-circuit state) from, an electricity supply. The state of the equipment modules (open — or close-circuit) changes in accordance with instructions received in the form of coded control signals. The control signals are electric signals super-imposed onto the electricity supply. Communication between the cordless controller 1 and the controlling modules 2 may be by means of modulated radio, infra-red, or ultrasonic signals transmitted through the air.

The instructions originate from the user, and are injected into the system from the cordless portable controller 1, which may typically have a keypad and an alpha-numeric custom display, and be designed to be pocket-size so the user may conveniently carry it.

The controller 1 may also transmit and receive acoustic tones for remote communication between the user and the system via the telephone network. In order to make use of this capability the system must, in addition to the equipment modules, include a telephone — interface module 6. This module 6 has means for connection to a telephone line and to the electrical wiring 3, and provides the link between them. It will be described in more detail later on.

Other modules may also be included in the system to enhance its capabilities. For example, programmable-time clock modules 7 may be connected to the electrical wiring 3, these modules being used to transmit instructions at pre-determined times. Logging modules 10 may also be included, these modules being connected to the electrical wiring 3 and being arranged to log all the signal activity on the wiring. Sensor modules 11, which can transmit signals in response to particular environmental conditions, can also be provided. These modules will also be described in more detail later on.

The controller 1 provides a link between the system, by using its receive/transmit capabilities, and the user, by using the keypad and display. When the user first acquires a system, the controller 1 must be initialised. This involves selection of a « house number », which must be input to the controller 1 via its keypad, and will then be stored in an on-board (preferably non-volatile) memory. The other modules may then be initialised in turn. To do this, each module must first be connected to the electrical wiring 3, and then be switched to « programming mode ». This may be done by inserting a key into the module, or by a switch, or the module may automatically be in « programming mode » for a period of time after it is connected to the power supply. An address selected by the user is then transmitted to the module using the controller 1. The module stores the address in a memory, and may then be switched out of « programming mode ». The stored address can only be changed if the module is again switched to « programming mode ».

Every module is allocated an address in this fashion. Every address has two parts, namely a « house number » and a module number. The « house number », once selected, is the same for all modules initialised for a particular system, and ensures that each system is secure from signals of other systems using the same phase of the electricity supply. The module number must be selected by the user to be different for every module of any system, and provides a unique address for each module.

Once initialised and incorporated into a system, the modules remain in a quiescent state, and may react to any instructions they may receive in control signals which contain the correct address. The control signals are transmitted in a format having a header which contains the address of the destination modules. In order to send an instruction, the user must enter the module number on the keypad of the controller 1 followed by an instruction code. The controller 1 does not transmit the « house number », since the control modules 2 insert this (see later).

In the case of equipment modules, there are three basic types of valid instructions that may be received, namely a request to change to open-circuit state ; a request to change to close-circuit state, and a request for status information.

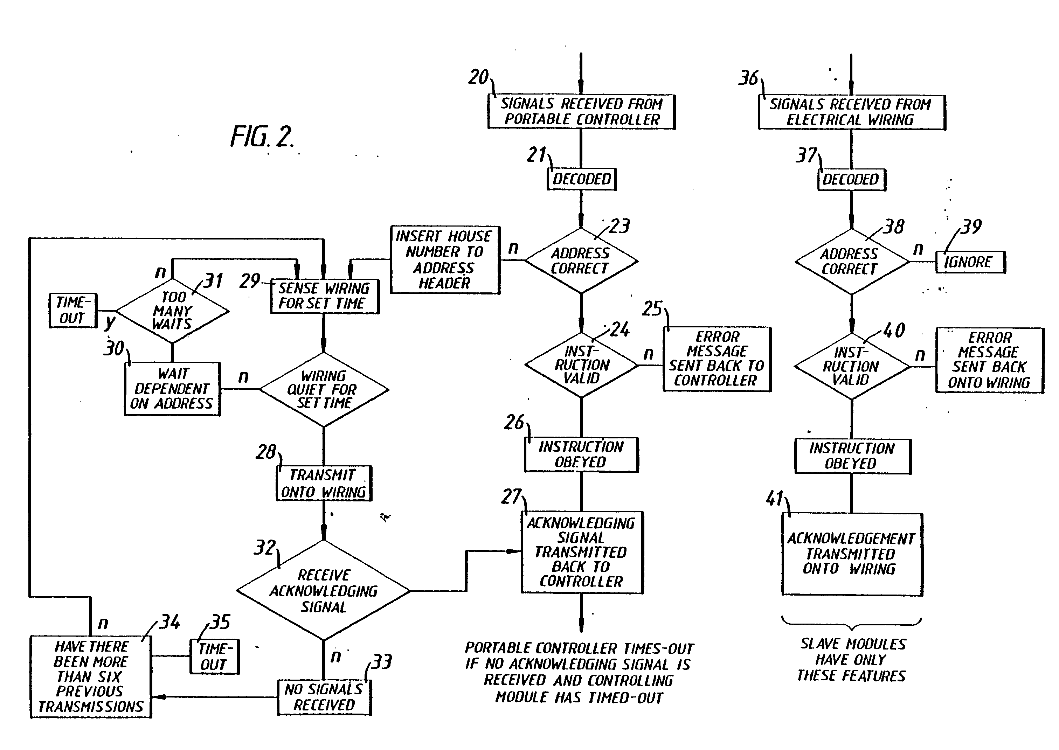

Referring to Figure 2, when a control module 2 receives (20) a control signal transmitted from the controller 1, that is a radio, infra red, or ultrasonic transmission, the signal is decoded (21) by the control module 2 and the header is checked (23) to see if the destination address coincides with the stored address of the control module in question. In the case where there is a match, the module 2 checks that the instruction is valid (24). If not, an error message acknowledging signal is sent (25). If valid, the module 2 acts (26) on the instructions contained in the control signal, and transmits an acknowledging signal (27) back to the controller.

The acknowledging signal has an address header, which, in this case, contains the address of the control module 2 in question, and the rest of the signal contains information regarding the new status of the control module. The controller 1, after transmitting a control signal awaits this response, and accepts the first valid response received. If no acknowledging signal is received the controller 1 eventually times out and displays an error message.

When a control module 2 receives a control signal transmitted from the controller 1, and the destination address does not coincide with the stored address, then the control module adds the « house number » to the address header, and modulates the entire control signal onto an electrical signal and transmits it (28) onto the wiring 3. Before transmitting onto the wiring 3, the control module 2 senses (29) the supply in the signal frequency band for a set length of time to see if it is busy. In the case where the supply is not busy, the transmission follows immediately. If the supply is busy, at any time during the set time, the control module 2 delays transmission (30). The length of the delay is related to the address of the module, so that, should two modules wish to transmit simultaneously, collision is avoided. If the supply continues to be busy, the module 2 eventually times out (31). This back-off procedure is adopted by all control modules 2 before transmitting control signals.

When the supply is not busy, and transmission of the control signal takes place, the control module 2 expects a return signal, immediately after transmission, from the destination module. The first valid signal transmitted onto the wiring 3 after transmission of a control signal is accepted (32) as the return signal, and causes an acknowledging signal to be transmitted to the controller 1. The return signal and acknowledging signals are identical in this case, and each has an address header which contains the address of the destination module in question, the rest of each signal containing information about the status of the destination module after the instruction has been obeyed. If no return signal is received (33), the control signal is retransmitted up to six times (34). If no return signal is received after the sixth attempt, the module 2 times out (35), and an error message is sent back to the controller 1.

When a module 2 receives (36) a control signal from the wiring 3, it is decoded (37), and the header is checked to see if the destination address matches the stored address (38). If not, the instruction contained in the control signal is ignored (39), and no further action is taken. If the destination address coincides with the module address, then the instruction is checked for validity. If not valid, an error message return signal is sent, and if valid the instruction is obeyed (40) and a return signal is sent (41). Since the return signal address header contains the address of the module which transmits it, the return signal is ignored by any other module that receives it from the wiring 3.

The longest turn-around time between the transmission of the last control signal from a control module 2, and the receipt of the return signal (when received) is shorter than the shortest set length of time that the module spends sensing the supply in the signal frequency band to check if it is busy before transmitting. Thus, once a control signal is sent by a module, no other module can transmit before the return signal should have been received back.

The controller 1 will not time out after transmitting a control signal until after the longest possible time-out time of the control modules 2. Therefore, no control signals will cause any changes in the system after the controller 1 has timed out.

The slave modules 5 receive only signals that have been modulated onto the electricity supply, not those directly transmitted from the controller 1. They do not retransmit control signals, but they do receive control signals from the wiring 3, and transmit return signals onto the wiring as above. These modules 5 are simpler and cheaper than control modules 2, and are useful in locations infrequently visited by the user, or where several appliances are co-sited.

The telephone interface module 6 provides a link between the electrical wiring 3 and a telephone line, and permits the user to access the system from remote locations by the use of a telephone. In order to use this facility, the user dials the line connected to the telephone interface module 6. If the telephone is answered, the telephone interface module 6 may monitor the call. If the telephone is not answered, then, after a pre-determined ringing sequence, the telephone interface module 6 answers, and announces itself to the user by using a voice synthesiser. At any time after the call is answered, the user may use the controller 1 to inject control signals in the form of acoustic tones into the telephone microphone. These control signals contain the « house number » in the address header, and are transmitted as electrical signals down the telephone line and, provided the « house number » is correct, are then relayed onto the electrical wiring 3 by the telephone interface module 6 in the same fashion as control modules 2.

The telephone interface module 6 receives return signals from the wiring 3, and relays the information in the form of a synthesised voice acknowledgement to the user via the telephone line.

An answering machine may be connected to the telephone interface module 6 in order to answer the telephone and record spoken messages. The telephone interface module 6 may monitor such a call as above.

The programmable time clock modules 7 each have a clock, a keypad, a display, and an instruction memory. This type of module may be programmed directly via the keypad, or by using the controller 1 and a set of time clock control signals, either via a control module 2 and the wiring 3, or by direct transmission between the controller and the time clock module (if the latter has this facility). Time clock control signals have a header with the time clock address, and an instruction portion which contains a control signal, the address of the destination module for the control signal and information about the time that the control signal is to be transmitted to the destination module. The control signals are transmitted by the time clock modules 7 using the same procedures as the control modules 2, except that no acknowledging signals are sent. However, a return signal store may optionally be provided which the user may interrogate by the use of yet another set of control signals.

The central heating control modules 8 are dedicated slave modules. They have the means necessary to control associated central heating plant, and means for receiving data from thermostats and other sensors 12 directly, and/or from sensor modules 11 via the electrical wiring 3 in similar manner to the control signals. They control the plant in response to the data received from the sensors 12, or in response to control signals received from the wiring. These modules 11 may have means to supply full status information concerning the heating plant.

Lighting control modules 9 are also dedicated slave modules. These have, in addition to the open-and close-circuit states, means for delivering any selected intermediate proportion of electrical power to the equipment. This is envisaged to be particularly useful to turn lights on or off or to « dim » them.

The logging modules 10 are connected to the electrical wiring 3, and have means for interfacing with a computer (not shown). These modules 10 log the signals on the system and present stored data concerning them to the computer upon request. These modules 10 also have means for permitting the system to be controlled by signals transmitted from the computer.

The sensor modules 11 are connected to the electrical wiring 3, and transmit predetermined control signals to predetermined modules in the event of an environmental threshold (humidity, temperature etc) being breached.

It will be evident that a wide variety of other modules, and different arrangements and combinations of the capabilities of the modules, can be used. In particular, it is possible that the control modules 2 are not equipment modules, that is to say they may be interconnected with other modules via the electrical wiring 3 and have means for communicating with the cordless portable controller 1, but not means for connection to equipment and appliances, or for connecting the equipment and appliances with the electricity supply.

Any module used in the system may include any of the capabilities of equipment modules if this is desired. Also, the equipment modules may include means for the independent control of several items of equipment. Alternatively, the modules may house built-in equipment and electricity power supplies, for example alarms, and batteries. All the modules may include means to enable the manual overriding of control signals. The modules may be wired into the electrical wiring 3, or may be detachably connected, for example they may plug into wall mounted sockets. In any case, the system may be expanded at any time by installing more modules, without affecting any existing modules.

The modules may respond to control signals transmitted to several addresses. This facility can be used, for instance, to programme several modules to respond to the same control signal sent to a particular address in addition to responding to control signals sent to their unique addresses. This « broadcast » control signals can be sent to any particular subset of modules (for example all lights) to control them simultaneously rather than having to repeat the control signal to all the desired modules.

The communications protocols described above are for example only. As described, the use of signal addresses and sensing of the signal bandwidth of the electrical wiring before transmission, renders the system secure from interference by unauthorised users and noise on the wiring, but any other protocols could be used if desired.

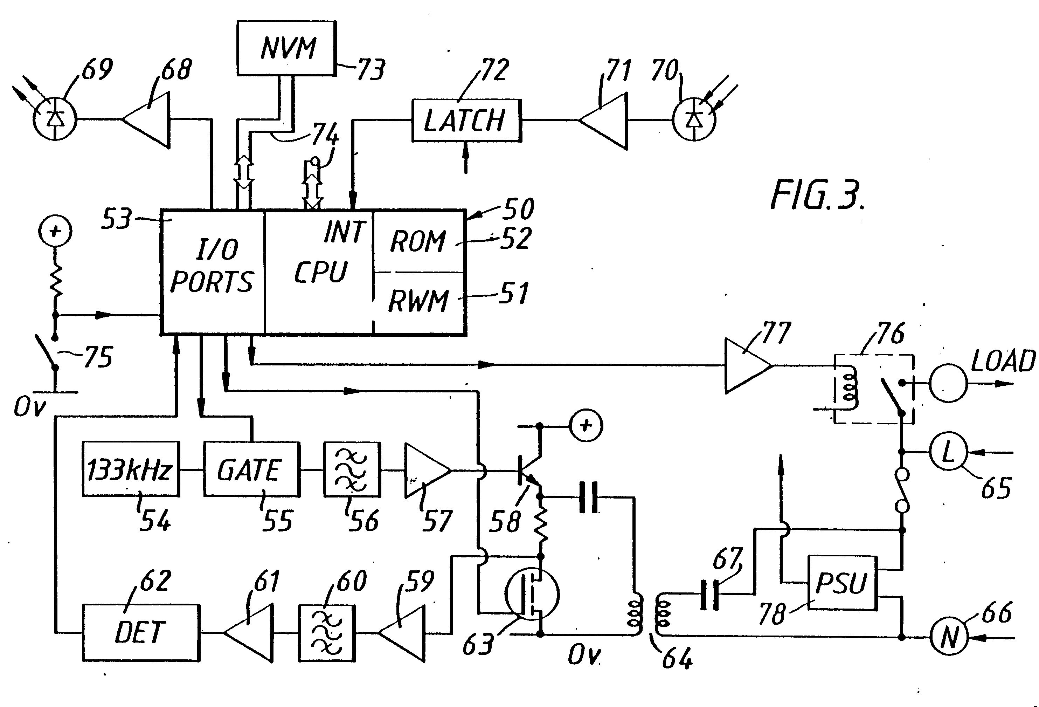

A block diagram of an equipment module is shown in Figure 3, and comprises a single-chip microprocessor 50, for example type 80C49 with an on-board read-write memory 51, a mask programmed read-only memory 52, and an input/output port 53. It receives and transmits signal streams via a mains receiver and transmitter and an infra-red transmitter and receiver.

In the mains transmitter a 133 kHz clock from a source 54 is gated on and off (55) under control of the processor 50 to produce a pulse position modulated (PPM) signal stream. The 133 kHz clock is band-pass filtered by a filter 56 and amplified at 57. The output is, therefore, a stream of short bursts of 133 kHz, separated by different time periods, representing « 0 », and « 1 » bits, supplied to an output transistor 58.

The mains receiver includes a buffer stage 59 to give the mains receiver a high input impedance, a 133 kHz filter 60, a further buffer 61 and a diode pump envelope detector 62. The input to the processor, 50 is a + 5 volt level with 0 volt pulses representing the envelope of the 133 kHz burst. The corresponding input/output port 53 is periodically polled by the processor 50.

The mains receiver/transmitter switch is put into the receive mode, the normal state, by the processor 50 holding the gate of a MOS field effect transistor 63 at a 0 level and turning it off. The received signal at the mains input terminals 65, 66 is applied via a capacitor 67, which acts as a block, to the 240 volt, 50 Hz mains but is transparent to the 133 kHz signals, and stepped up by a transformer 64.

A 1 level on the gate of the transistor 63 turns it on, and allows current to flow through the driver transistor 58. The collector current of the latter is 30 mA to achieve a low output impedance for the transmitter. To further aid this, the transformer 64 presents a step down turns ratio giving an impedance transformation resulting in a low output impedance.

The infra-red transmitter comprises a driver amplifier arrangement 68, via which a 0 pulse from the appropriate processor output port is caused to discharge a capacitor through infra-red light-emitting diodes 69. These diodes 69 thus transmit a narrow infra-red pulse.

In the infra-red receiver, negative going pulses are generated by an infra-red photodiode 70 in response to an infra-red transmission, and these pulses are amplified by a low noise, high gain amplifier 71. The pulses are applied to the clock input of a latch 72. The output of the latch 72 results in an interrupt to the processor 50.

A non-volatile memory 73 is used to retain the user programmed house code and address, and the relay status when the unit is disconnected from the mains. It is written to, and read from, serially under control of the processor 50 via lines 74.

A switch 75 (push-to-make) is operated by the user to toggle the state of the relay, and to enter the programming mode.

The processor 50 controls a relay 76 via a buffer stage 77.

Finally, a power supply 78 supplies power to other components of the equipment module.

The equipment module shown in Figure 3 corresponds to the control module 2 of Figure 1. For a slave module, of course, the infra-red signalling components can be omitted. Other modules referred to above, such as the telephone interface module 6, and the central heating controller 8 are based on the same design, but require additional equipment, for example a telephone modem and further input/output control ports respectively which can be interfaced via a microprocessor bus 74 (not used in the basic module).

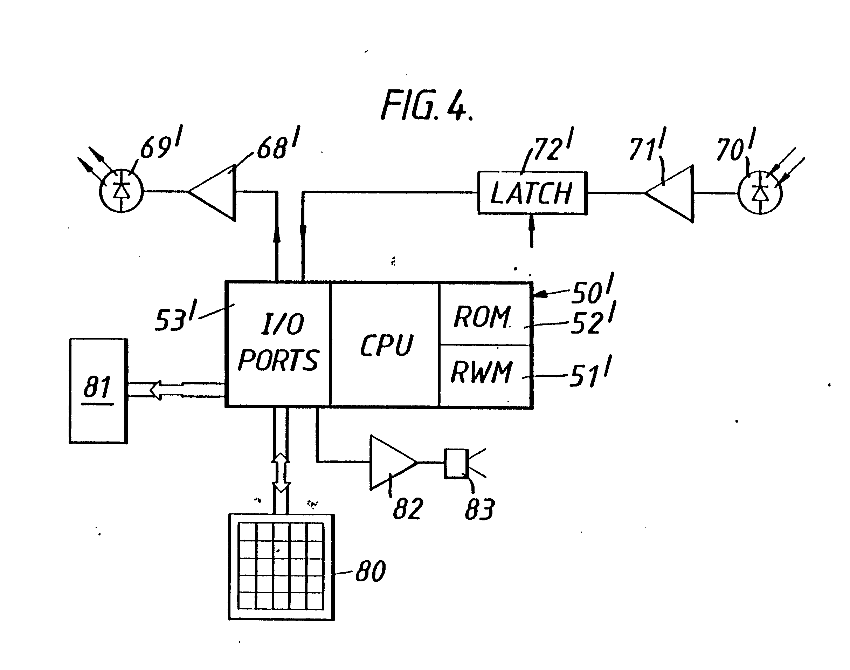

The cordless portable controller 1 (see Figure 4) includes a microprocessor and an infra-red transmitter that are similar (except that the infra-red receiver is polled, rather than interrupt driven) to those employed in the equipment module, and will not be described again. Corresponding parts are indicated by the same reference numerals with a prime ('). As the controller 1 is assumed to be battery operated, and the processor can be placed, when the controller is switched off, in a « stop », condition, in which it ceases operation but memory is maintained with only minimal battery drain, a separate non-volatile memory is not provided.

The controlling operation of the equipment has been discussed above. However, some further description of the programming procedures is in order.

Assume that the house code has been entered into the controller 1 (for example by pressing a « program » key on the keypad, and then entering the 6-digit number). In order to program an equipment module with its address, the following sequence is used :

The module to be programmed is connected to the mains, and the controller 1 is switched to infra-red signalling (that is to say not acoustic)

(a) Using the controller 1 previously programmed with the chosen house code, enter the required address on the keypad (one or two digits).

(b) Press and hold the on/off button of the module to be programmed, in order to place it in the programming mode.

(c) Point the controller 1 at the infra-red receptor on the module to be programmed, and press the « program » key. The controller 1 then transmits a program command accompanied by the house code and the equipment address. The module receives the code and address, and stores them in its non-volatile memory 73, and transmits an acknowledgement to the controller 1. The controller display will show « ... » until a reply is received, and then display the address and « done » (flashing) if the operation has been successful.

(d) If the operation has failed for any reason, or there is no reply, the display shows « FAIL ».

(e) After successfully programming a module, the on/off key should be released, and the module will retain its address and house code even when it is disconnected from the mains.

Alternatively, the module can be programmed by signals sent along the mains wiring 3 from another module. Obviously this is essential in the case of a slave module. The programming signals from the controller 1 are received by the control module 2 (which is not in « program » mode), and relayed via the wiring 3, and will program any connected module which is in program mode.

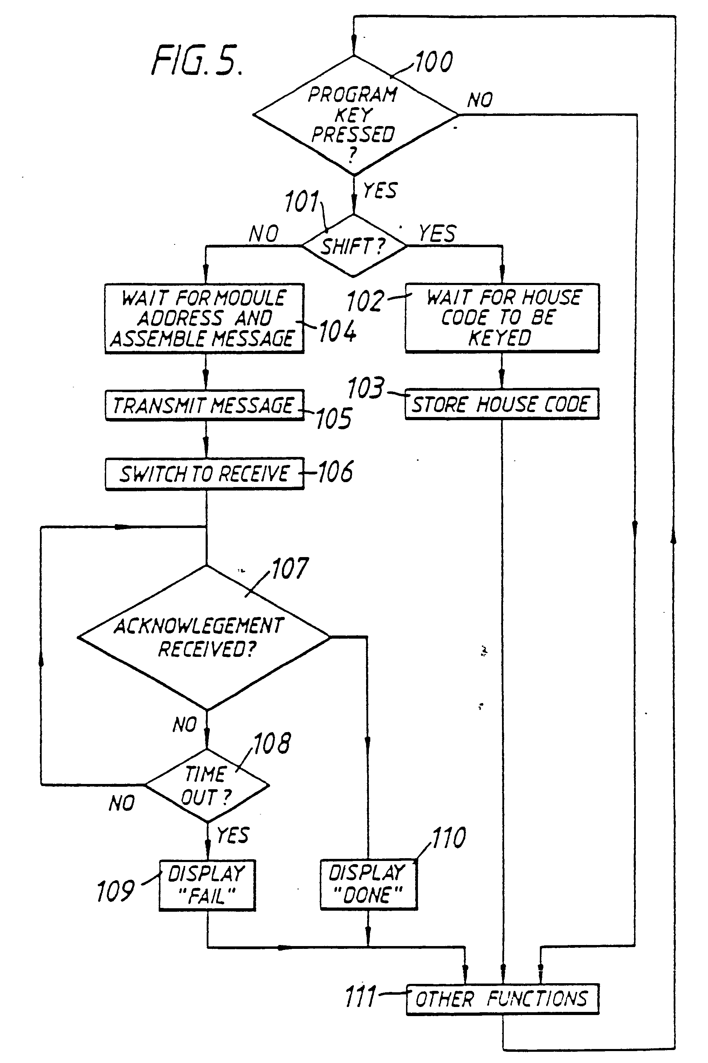

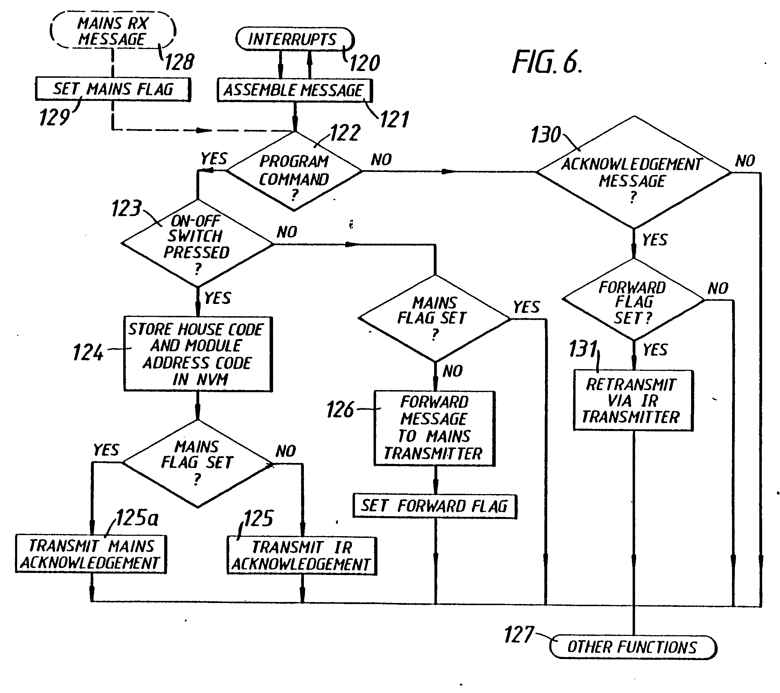

The programming of the portable controller 1 and the equipment module to achieve these functions is illustrated in the flowcharts of Figures 5 and 6.

The controller 1 (Figure 5) responds (100) to the « program » key being pressed. If (101) a shift key is also pressed, it waits (102) for entry of a 6-digit house code and, when it is received, stores it (103).

If the shift key has not been depressed, the module address is then entered and a digitally coded message is assembled (104), this message comprising a program command code, the stored house code, and the entered address. After transmission (105) of the message, the controller 1 returns to receive and awaits (106, 107) an aknowledgement. If this is received or not received after a predetermined time (108), appropriate « DONE » or « FAIL » messages are displayed on the LCD display (109, 110).

Upon exit from this section of the program, the controller 1 deals with other functions (111) and returns to check the program key again.

In the equipment module (see Figure 6), interrupts (120) to the processor indicate that a message is being received by the infra-red receiver, and the serially received message bits are assembled (121) in an internal register. The command portion of the message is checked (122) and acted upon : if the command is a program command and (123) the on-off switch is depressed (as indicated by the signals on the processor input port to which it is connected) then the remainder of the message is interpreted as a house code and an equipment module address, and these are then stored (124) in the non-volatile memory 73. Then an acknowledgement message is transmitted via the infra-red transmitter 68, 69.

If the switch is not pressed, the program command is assumed to be intended for another module, and it is forwarded serially (126) to the gate 55 of the mains transmitter.

Other functions are illustrated at 127. One of these other functions is polling the output from the detector 62, and assembling the bit serial message received. This eventuality is illustrated by entry point 128 to the flowchart, and a program command is processed in the same way as before, so that a module (especially a slave module) can be programmed via another module. In this case, of course, step 126 is unnecessary and is omitted. Also the « transmit acknowledgement » step (125a) is via the mains transmitter. These charges can be effected by setting a flag (step 129).

A mains-borne acknowledgement is identified (130) in the module relaying the program command, and retransmitted (131) via its infra-red transmitter, and therefore the acknowledgement is safely returned to the controller.

## Claims

1. A system for the control of electricity supply to equipment (4) via electrical wiring (3), the system comprising a plurality of modules (2, and 5-11) which, in use, are interconnected via the electrical wiring, each of the modules including store means (73) for storing a respective module address, at least some of the modules — control modules (2) — having means (70) for receiving command signals transmitted from a cordless portable controller (1) and for retransmitting (69) said command signals over the electrical power wiring to other modules, and at least some of the modules (8, 9) including control means (76) for controlling electricity supply to respective equipment (4) connected thereto, in response to command signals received via the electrical wiring and containing a destination address which matches the stored address stored in its store means, characterised in that each module contains means (75) for switching to a programming mode during which the respective module is operable in response to a program command message from the controller (1) to store a module address contained in that message in its store means (73).

2. A system as claimed in claim 1, wherein at least one control module (2) also includes said control means (76), and is arranged to control electricity supply to the respective equipment (4) connected thereto in response to command signals received directly from the cordless portable controller (1), and in response to command signals retransmitted over the wiring (3) by another controller (2).

3. A system as claimed in claim 1 or claim 2, wherein at least one of the modules has receiving means for receiving command signals only from the electrical wiring (3).

4. A system as claimed in any one of claims 1 to 3 wherein at least one of the modules (8) includes means (69) for transmitting, onto the wiring (3), signals containing information concerning the status of the supply of electricity to the respective equipment (4) connected thereto, and at least one control module (2) also includes means for transmitting status signals to the cordless portable controller (1).

5. A system as claimed in any one of claims 1 to 4, wherein at least one of the modules is interconnected to other modules by means of being removably plugged into sockets attached to the electrical wiring (3).

6. A system as claimed in any one of claims 1 to 5, wherein at least one module (9) which includes control means (76) is controllable to connect and disconnect the electricity supply to the respective equipment connected to that module, and to deliver any selected intermediate proportion of the supply to that equipment (4).

7. A system as claimed in any one of claims 1 to 6, wherein at least one of the modules (6) includes means for receiving command signals from a telephone line, and means for retransmitting such command signals over the electrical wiring (3) to other modules.

8. A system as claimed in any one of claims 1 to 7, wherein at least one of the modules (7) includes means for storing command signals, and means for transmitting the stored commands onto the wiring (3) at predetermined times.

9. A system as claimed in any one of claims 1 to 8, wherein at least one control module (2) is also arranged to examine the wiring (3) for the presence of signals or noise and to delay transmission if the wiring is busy at any time during the examination.

10. A system as claimed in any one of claims 1 to 9, wherein at least one of the modules (11) has means for sensing environmental conditions.

11. A system as claimed in any one of claims 1 to 10, further comprising at least one remote sensor (12) responsive to environmental conditions and having a transmitter to transmit corresponding signals to a respective module (8), the or each sensor being arranged to transmit said signals via the electrical wiring (3).

12. A system as claimed in claim 11, wherein at least one sensor, and its associated transmitter, is housed in a unit (11) which plugs into an electrical power socket.

13. A module (2, and 5-11) for use in a system for controlling the supply of electricity to equipment, the module comprising store means, receiving means, and control means, the store means being arranged for storing a respective module address, the receiving means being arranged for receiving command signals from a cordless portable controller (1) either directly or via electrical power wiring (3), and the control means being arranged for controlling the electricity supply to equipment connected to the module in response to command signals containing an address which matches the stored address, characterised in that the module contains means (75) for switching to a programming mode during which the module is operable in response to a program command message from the controller (1) to store a module address contained in that message in its store means.

14. A module as claimed in claim 13, wherein the module (2) is also arranged to receive signals from the electrical wiring (3), and to retransmit such signals to the cordless portable controller (1).

## Patentansprüche

1. System zur Steuerung von Elektrizitätszufuhr zu Geräten (4) über ein elektrisches Netz (3), wobei das System umfaßt eine Vielzahl von Modulen (2, und 5 bis 11), die beim Gebrauch über das elektrische Netz miteinander verbunden sind, wobei jedes der Module eine Speichereinrichtung (73) enthält zum Speichern einer jeweiligen Moduladresse, wobei wenigstens einige der Module — Steuermodule (2) — eine Einrichtung (70) haben zum Empfangen von Befehlssignalen, die von einer kabellosen tragbaren Steuerung (1) übertragen werden und zum Weiterübermitteln (69) der Befehlssignale an andere Module über das elektrische Leistungsnetz, und wobei wenigstens einige der Module (8, 9) eine Steuereinrichtung (76) beinhalten zur Steuerung der Elektrizitätszufuhr zu jeweiligen Geräten (4), die mit dieser verbunden sind, und zwar in Antwort auf Befehlssignale, die über das elektrische Netz übertragen werden und eine Zieladresse enthalten, die zu der in ihrer Speichereinrichtung gespeicherten Adresse paßt, dadurch gekennzeichnet, daß jedes Modul eine Einrichtung (75) enthält zum Schalten in einen Programmiermodus, während dessen das jeweilige Modul in Antwort auf eine Programm-Befehlsmitteilung von der Steuerung (1) betriebsbereit ist, um eine Moduladresse, die in der Mitteilung enthalten ist, in ihrer Speichereinrichtung (73) abzuspeichern.

2. System nach Anspruch 1, bei dem wenigstens ein Steuermodul (2) auch die Steuereinrichtung (76) enthält, und das ausgelegt ist, eine Elektrizitätszufuhr zu jeweiligen Geräten (4), die mit dieser verbunden sind, in Antwort auf Befehlssignale zu steuern, die direkt von der kabellosen tragbaren Steuerung (1) empfangen werden, und in Antwort auf Befehlssignale, die über das Netz (3) durch eine andere Steuerung (2) weiter übermittelt werden.

3. System nach Anspruch 1 oder 2, bei dem wenigstens eines der Module (8) eine Empfangseinrichtung hat zum Empfangen von Befehlssignalen ausschließlich von dem elektrischen Netz (3).

4. System nach einem der Ansprüche 1 bis 3, wobei wenigstens eines der Module (8) eine Einrichtung (69) enthält zum Übertragen, über das Netz (3), von Signalen, die Information enthalten, die den Status der Elektrizitätszufuhr zu dem jeweiligen Gerät (4) betrifft, welches mit diesem verbunden ist, und wobei wenigstens ein Steuermodul (2) auch eine Einrichtung zum Übertragen von Statussignalen zu der kabellosen tragbaren Steuerung (1) enthält.

5. System nach einem der Ansprüche 1 bis 4, wobei wenigstens eines der Module mit anderen Modulen verbunden ist, indem es abnehmbar in Steckdosen gesteckt wird, die an das elektrische Netz (3) angeschlossen sind.

6. System nach einem der Ansprüche 1 bis 5, wobei wenigstens ein Modul (9), welches eine Steuereinrichtung (76) enthält, steuerbar ist, um die Elektrizitätszufuhr zu dem jeweiligen Gerät, das mit dem Modul verbunden ist, zu verbinden und zu lösen, und uni irgendeinen ausgewählten Zwischenbetrag der Zufuhr an das Gerät (4) abzugeben.

7. System nach einem der Ansprüche 1 bis 6, wobei wenigstens eines der Module (6) eine Einrichtung enthält zum Empfangen von Befehlssignalen von einer Telefonleitung, und eine Einrichtung enthält zum Weiterübermitteln solcher Befehlssignale über das elektrische Netz (3) an andere Module.

8. System nach einem der Ansprüche 1 bis 7, wobei wenigstens eines der Module (7) aufweist eine Einrichtung zum Speichern von Befehlssignalen und eine Einrichtung zum Übertragen der gespeicherten Befehle in das Netz (3) zu vorbestimmten Zeitpunkten.

9. System nach einem der Ansprüche 1 bis 8, wobei wenigstens ein Steuermodul (2) auch ausgelegt ist, das Netz (3) auf das Vorliegen von Signalen oder Rauschen zu überprüfen und die Übertragung zu verzögern, wenn das Netz zu irgendeiner Zeit während der Prüfung belegt ist.

10. System nach einem der Ansprüche 1 bis 9, wobei wenigstens eines der Module (11) eine Einrichtung hat zum Detektieren der Umgebungsbedingungen.

11. System nach einem der Ansprüche 1 bis 10, weiterhin aufweisend wenigstens einen Fernsensor (12), der auf Umgebungsbedingungen anspricht und einen Übertrager hat, um entsprechende Signale zu einem jeweiligen Modul zu übertragen, wobei der oder jeder Sensor ausgelegt ist, die Signale über das elektrische Netz (3) zu übertragen.

12. System nach Anspruch 11, wobei wenigstens ein Sensor und sein dazugehöriger Übertrager in einer Einheit (11) untergebracht ist, die in eine elektrische Netzsteckdose eingesteckt wird.

13. Modul (2, und 5 bis 11) zum Gebrauch in einem System zur Steuerung der Elektrizitätszufuhr an Geräte, wobei das Modul aufweist eine Speichereinrichtung, eine Empfangseinrichtung und eine Steuereinrichtung, wobei die Speichereinrichtung ausgelegt ist zum Speichern einer jeweiligen Moduladresse, wobei die Empfangseinrichtung ausgelegt ist zum Empfangen von Befehlssignalen von einer kabellosen tragbaren Steuerung (1) entweder direkt oder über ein elektrisches Leistungsnetz (3), und wobei die Steuereinrichtung ausgelegt ist zum Steuern der Elektrizitätszufuhr an ein Gerät, das mit dem Modul verbunden ist, und zwar in Antwort auf Befehlssignale, die eine Adresse enthalten, die mit der gespeicherten Adresse übereinstimmt, dadurch gekennzeichnet, daß das Modul eine Einrichtung (75) enthält zum Schalten in einen Programmiermodus, während dessen das Modul in Antwort auf eine Programm-Befehlsmitteilung von der Steuerung (1) betriebsbereit ist, um eine Moduladresse, die in der Mitteilung enthalten ist, in ihrer Speichereinrichtung abzuspeichern.

14. Modul nach Anspruch 13, wobei das Modul (2) auch ausgelegt ist, Signale von der elektrischen Verdrahtung (3) zu empfangen und solche Signale an die kabellose tragbare Steuerung (1) weiter zu übermitteln.

**Revendications**

8

1. Un système destiné à la commande d'alimentation en électricité d'un équipement (4) par l'intermédiaire d'un câblage électrique (3), le système comprenant plusieurs modules (2, et 5 à 11), qui, en utilisation, sont reliés entre eux par l'intermédiaire du câblage électrique, chacun des modules comprenant des moyens de mémorisation (73) pour mémoriser une adresse respective de module, au moins certains des modules — les modules de commande (2) — comportant des moyens (76) pour recevoir des signaux d'instruction transmis depuis un dispositif de commande portable sans fil (1) et pour retransmettre (64) lesdits signaux d'instruction au moyen du câblage électrique d'énergie à d'autres modules, et au moins certains des modules (84) comprenant des moyens de commande (76) pour commander l'alimentation en électricité à l'équipement respectif (4) qui leur est relié, en réponse à des signaux d'instruction reçus par l'intermédiaire du câblage électrique et contenant une adresse de destination qui correspond à l'adresse mémorisée, mémorisée dans ses moyens de mémorisation, caractérisé en ce que chaque module contient des moyens (75) pour commuter vers un mode de programmation pendant lequel le module respectif peut fonctionner en réponse à un message d'instruction de programme provenant du dispositif de commande (1) pour mémoriser une adresse de module contenue dans ce message dans ses moyens de mémorisation (73).

2. Un système selon la revendication 1, dans lequel au moins un module de commande (2) comprend aussi des moyens de commande (76) et est agencé pour commander l'alimentation en électricité de l'équipement respectif (4) qui lui est relié en réponse à des signaux d'instruction reçus directement depuis le dispositif de commande portable sans fil (1), et en réponse à des signaux d'instruction retransmis par l'intermédiaire du câblage (3) par un autre dispositif de commande (2).

3. Un système selon la revendication 1 ou la revendication 2, dans lequel au moins l'un des modules comporte des moyens de réception pour recevoir des signaux d'instruction seulement depuis le câblage électrique (3).

4. Un système selon une quelconque des revendications 1 à 3, dans lequel au moins l'un des modules (8) comprend des moyens (64) pour transmettre, sur le câblage (3), des signaux contenant une information concernant le statut de l'alimentation en électricité de l'équipement respectif (4) qui lui est relié, et au moins un module de commande (2) comprend aussi des moyens pour transmettre des signaux de statut au dispositif de commande portable sans fil (1).

5. Un système selon une quelconque des revendications 1 à 4, dans lequel au moins l'un des modules est relié à d'autres modules par des moyens consistant à être introduit de façon amovible dans des prises femelles attachées au câblage électrique (3).

6. Un système selon une quelconque des revendications 1 à 5, dans lequel au moins un module (9) qui comprend des moyens de commande (76) peut être commandé pour connecter ou déconnecter l'alimentation en électricité de l'équipement respectif relié à ce module, et pour fournir une proportion intermédiaire souhaitée quelconque de l'alimentation à cet équipement (4).

7. Un système selon une quelconque des revendications 1 à 6, dans lequel au moins l'un des modules (6) comprend des moyens pour recevoir des signaux d'instruction provenant d'une ligne téléphonique, et des moyens pour retransmettre de tels signaux d'instruction par l'intermédiaire du câblage électrique (3) à d'autres modules.

8. Un système selon une quelconque des revendications 1 à 7, dans lequel au moins l'un des modules (7) comprend des moyens pour mémoriser des signaux d'instruction, et des moyens pour transmettre les instructions mémorisées sur le câblage (3) à des instants déterminés au préalable.

9. Un système selon une quelconque des revendications 1 à 8, dans lequel au moins un module de commande (2) est également agencé pour examiner le câblage (3) pour y détecter la présence de signaux ou de bruit et pour retarder la transmission si le câblage est occupé à un instant quelconque pendant l'examen.

10. Un système selon une quelconque des revendications 1 à 9, dans lequel au moins l'un des modules (11) comporte des moyens pour détecter les conditions d'environnement.

11. Un système selon une quelconque des revendications 1 à 10, comprenant de plus au moins un détecteur à distance (12) sensible à des conditions d'environnement et comportant un dispositif de transmission pour transmettre des signaux correspondants à un module respectif (8), le détecteur ou chaque détecteur étant agencé pour transmettre lesdits signaux par l'intermédiaire du câblage électrique (3).

12. Un système selon la revendication 11, dans lequel au moins un détecteur, et son transmetteur associé, sont logés dans une unité (11) qui s'embroche dans une prise femelle électrique d'énergie.

13. Un module (2, et 5 à 11) destiné à être utilisé dans un système pour commander l'alimentation en électricité d'un équipement, le module comprenant des moyens de mémorisation, des moyens de réception, et des moyens de commande, les moyens de mémorisation étant agencés pour mémoriser une adresse respective de module, les moyens de réception étant agencés pour recevoir des signaux d'instruction depuis un dispositif de commande portable sans fil (1) soit directement soit par l'intermédiaire du câblage électrique (3) d'énergie, et les moyens de commande étant agencés pour commander l'alimentation en électricité de l'équipement relié au module en réponse à des signaux d'instruction contenant une adresse qui correspond à l'adresse mémorisée, caractérisé en ce que le module contient des moyens (75) pour commuter dans un mode de programmation pendant lequel le module peut fonctionner en réponse à un message d'instruction de programme venant du dispositif de commande (1) pour mémoriser une adresse de module contenue dans ce message dans ses moyens de mémorisation.

14. Un module selon la revendication 13, dans lequel le module (2) est également agencé pour recevoir des signaux provenant du câblage électrique (3), et pour retransmettre de tels signaux vers le dispositif de commande portable sans fil (1).

FIG. 1.

## FIG. 2.

**20** SIGNALS RECEIVED FROM PORTABLE CONTROLLER

**21** DECODED

**23** ADDRESS CORRECT — n → INSERT HOUSE NUMBER TO ADDRESS HEADER → **29** SENSE WIRING FOR SET TIME

**31** TOO MANY WAITS — n

TIME-OUT ← y

**30** WAIT DEPENDENT ON ADDRESS — n → **(wiring)**

WIRING QUIET FOR SET TIME

**28** TRANSMIT ONTO WIRING

**32** RECEIVE ACKNOWLEDGING SIGNAL

**33** NO SIGNALS RECEIVED — n

**35** TIME-OUT

**34** HAVE THERE BEEN MORE THAN SIX PREVIOUS TRANSMISSIONS — n

**24** INSTRUCTION VALID — n → **25** ERROR MESSAGE SENT BACK TO CONTROLLER

**26** INSTRUCTION OBEYED

**27** ACKNOWLEDGING SIGNAL TRANSMITTED BACK TO CONTROLLER

PORTABLE CONTROLLER TIMES-OUT IF NO ACKNOWLEDGING SIGNAL IS RECEIVED AND CONTROLLING MODULE HAS TIMED-OUT

**36** SIGNALS RECEIVED FROM ELECTRICAL WIRING

**37** DECODED

**38** ADDRESS CORRECT — n → **39** IGNORE

**40** INSTRUCTION VALID — n → ERROR MESSAGE SENT BACK ONTO WIRING

INSTRUCTION OBEYED

**41** ACKNOWLEDGEMENT TRANSMITTED ONTO WIRING

SLAVE MODULES HAVE ONLY THESE FEATURES

EP 0 225 340 B1

FIG.3.

# FIG. 4.

EP 0 225 340 B1

*FIG.5.*

100

PROGRAM
KEY
PRESSED
?

NO

101

NO ◁ SHIFT? ▷ YES

WAIT FOR MODULE
ADDRESS AND
ASSEMBLE MESSAGE — 104

102 — WAIT FOR HOUSE
CODE TO BE
KEYED

TRANSMIT MESSAGE — 105

103 — STORE HOUSE CODE

SWITCH TO RECEIVE — 106

107

ACKNOWLEGEMENT
RECEIVED?

NO

108

TIME
OUT ?

NO

YES

109 — DISPLAY
"FAIL"

DISPLAY
"DONE"

110

111 — OTHER FUNCTIONS

FIG. 6.

MAINS RX MESSAGE — 128

SET MAINS FLAG — 129

INTERRUPTS — 120

ASSEMBLE MESSAGE — 121

122 PROGRAM COMMAND ?
YES — NO

123 ON-OFF SWITCH PRESSED ?
NO
YES

124 — STORE HOUSE CODE AND MODULE ADDRESS CODE IN NVM

MAINS FLAG SET ?
YES — NO

125a — TRANSMIT MAINS ACKNOWLEDGEMENT

125 — TRANSMIT IR ACKNOWLEDGEMENT

MAINS FLAG SET ?
YES
NO

126 — FORWARD MESSAGE TO MAINS TRANSMITTER

SET FORWARD FLAG

130 ACKNOWLEDGEMENT MESSAGE ?
YES — NO

FORWARD FLAG SET?
NO
YES

131 — RETRANSMIT VIA IR TRANSMITTER

127 — OTHER FUNCTIONS

EP 0 225 340 B1